# EUROPÄISCHE PATENTANMELDUNG

(11) **EP 0 630 730 A1**
(43) Veröffentlichungstag der Anmeldung: **28.12.1994**
(21) Anmeldenummer: 94109498.9
(22) Anmeldetag: 20.06.1994
(51) Int. Cl.: B29C 33/60, B29C 33/62, B29C 33/64

(54) **Zusammensetzungen mit chlorfreien, gegebenenfalls wasserstoffhaltigen Fluorkohlenwasserstoffen**

(30) Priorität: 26.06.1993 DE 4321288
(71) Anmelder: Solvay Fluor und Derivate GmbH, D-30173 Hannover (DE)
(72) Erfinder: Buchwald, Hans, D-30952 Ronnenberg (DE); Hellmann, Joachim, D-30171 Hannover (DE); Raschkowski, Boleslaus, D-31719 Wiedensahl (DE)
(74) Vertreter: Lauer, Dieter, Dr.

(57) **Zusammenfassung**

Beschrieben werden als Trennmittel geeignete druckverflüssigte Zusammensetzungen, die einen Fluorkohlenwasserstoff (FKW) aus der Gruppe R134a, R143a, R125, R32, R143, R134, R23, R152a, R14 und R116 sowie ein trennend wirkendes Agens und gegebenenfalls weitere für Trennmittel übliche Zusätze enthalten; bevorzugt sind hierbei die Zusammensetzungen mit den genannten wasserstoffhaltigen Fluorkohlenwasserstoffen (HFKW). Ebenfalls beschrieben wird die Verwendung der Zusammensetzungen als Trennmittel sowie ein Verfahren zu deren Herstellung.

## Beschreibung

Die vorliegende Erfindung betrifft die Verwendung von chlorfreien Fluorkohlenwasserstoffen (FKW), insbesondere von wasserstoffhaltigen Fluorkohlenwasserstoffen (HFKW), als Bestandteil von Trennmittel-Zusammensetzungen sowie die Verwendung dieser Zusammensetzungen als Trennmittel und ein Verfahren zu deren Herstellung.

Bei vielen industriellen Arbeitsvorgängen müssen Hilfsmittel eingesetzt werden, durch die die Affinität zwischen verschiedenen Materialien, z. B. Werkstück und Werkzeug oder Formling und Form, möglichst gering gehalten werden kann. Dies wird im allgemeinen je nach Arbeitsvorgang durch den Einsatz von Trennmitteln erreicht. So werden bei der Herstellung und Verarbeitung von Kunststoffen, Schaumstoffen, Baustoffen, Gummiartikeln, Reifen, Metallen, Gläsern, Keramikprodukten usw., die Herstellungstechniken wie Gießen, Formen, Pressen usw. umfassen, Trennmittel benötigt. Trennmittel sind in diesem Zusammenhang Mittel, welche feste oder flüssige Filme bilden, die die Adhäsionskräfte zwischen zwei aneinandergrenzenden Oberflächen verringern, d. h. ihr Verkleben verhindern und so als Trenn-, Schalmittel oder Gleitmittel wirksam werden. Sie können Lösungen oder Dispersionen von trennend wirksamen Agenzien sein.

Nach K. Schardt, Kunststoffe, Band 72, Seite 461 - 462, 1982, ist die Verwendung von Silikonen, Metallseifen, Wachsen, fetten Ölen, synthetischen Polymeren und anorganischen Stoffen als trennend wirksame Agenzien bekannt. Als Lösungsmittel werden dabei flüssige aliphatische Kohlenwasserstoffe, halogenierte Kohlenwasserstoffe und Wasser genannt.

In der deutschen Offenlegungsschrift DE 33 35 870 wird die Herstellung von speziellen Wachsderivaten beschrieben, die als schmierend und/oder trennend wirksame Bestandteile zusammen mit Lösungsmitteln in Trennmitteln enthalten sein können. Als Lösungsmittel werden die Fluorchlorkohlenwasserstoffe Trichlormonofluormethan (R11), 1,1,2-Trichlor-1,2,2-trifluorethan (R113), 1,1,2,2-Tetrachlordifluorethan (R112), Tetrachlormonofluorethan (R121) und/oder Trichlordifluorethan (R122) als geeignet angegeben.

Es bestand die Aufgabe, neue verbesserte und die Umwelt weniger belastende Zusammensetzungen für die trennende Bearbeitung oder Verarbeitung von Werkstücken aus unterschiedlichen Materialien zur Verfügung zu stellen, insbesondere solche Zusammensetzungen, die eine sparsame Verwendung und einen geringen Energieaufwand bei der Anwendung gestatten und die ferner ohne häufiges Reinigen der benutzten Formen verwendet werden können. Eine weitere Aufgabe der Erfindung war die Bereitstellung eines Verfahrens zur Herstellung dieser als Trennmittel geeigneten Zusammensetzungen.

Die Aufgaben werden gelöst durch die erfindungsgemäßen Zusammensetzungen, Verwendungen und Verfahren.

Es wurden nun als Trennmittel geeignete druckverflüssigte Zusammensetzungen gefunden, die wenigstens einen chlorfreien Fluorkohlenwasserstoff (FKW) aus der Gruppe
R 134a = 1,1,1,2-Tetrafluorethan
R 143a = 1,1,1-Trifluorethan
R 125 = Pentafluorethan
R 32 = Difluormethan
R 143 = 1,1,2-Trifluorethan
R 134 = 1,1,2,2-Tetrafluorethan
R 23 = Trifluormethan
R 152a = 1,1-Difluorethan
R 14 = Tetrafluormethan
R 116 = Hexafluorethan
und ein trennend wirksames Agens und gegebenenfalls weitere für Trennmittel übliche Zusätze aus der Gruppe der Lösungsvermittler, Korrosionsinhibitoren und Stabilisatoren enthalten. Bei den in den Zusammensetzungen enthaltenen Fluorkohlenwasserstoffen handelt es sich um chlorfreie Verbindungen, die wasserstofffrei sein können (FKW) oder bevorzugt neben Fluor noch Wasserstoff enthalten können (HFKW).

Diese erfindungsgemäß für die Trennmittelzusammensetzungen ausgewählten Fluorkohlenwasserstoffe sind druckverflüssigte Gase mit an sich geringer Lösekraft, die trotz ihrer Chlorfreiheit eine ausreichende Lösekraft bzw. Dispergiervermögen besitzen.

Bevorzugte Fluorkohlenwasserstoffe sind wasserstoffhaltig, vorzugsweise R134a und R125 (HFKW), insbesondere aber R134a; diese HFKW zeichnen sich in den Zusammensetzungen durch besonders gute Dispergiereigenschaften aus und bieten den Vorteil eines geringen Energieaufwandes bei der Anwendung.

In einer zweckmäßigen Ausgestaltung enthalten die als Trennmittel geeigneten druckverflüssigten Zusammensetzungen wenigstens 15 Gew.-% eines der vorstehend genannten Fluorkohlenwasserstoffe. Beispielsweise können sie den Fluorkohlenwasserstoff in Mengen im Bereich von 15 bis 99,9 Gew.-% enthalten. Daneben enthalten sie 0,1 bis 40 Gew.-%, vorzugsweise 0,1 bis 30 Gew.-%, an trennend wirksamen Agenzien und gegebenenfalls bis zu 80 Gew.-% an Lösungsvermittlern.

Die erfindungsgemäßen Zusammensetzungen können als wirksames Agens ein trennend wirksames Agens aus der Gruppe der Wachse, Wachsderivate, Paraffine, Silikone, Metallseifen, Fette, Öle, Polymere und anorganischen Pulver enthalten. Wachse und Wachsderivate im Sinne der vorliegenden Erfindung umfassen sowohl natürliche Wachse tierischer oder pflanzlicher Herkunft wie auch synthetische Wachse und Wachsderivate. Unter den natürlichen Wachsen werden vorzugsweise natürliche Wachse mit einem Erweichungspunkt von mindestens 40 °C eingesetzt.

In einer bevorzugten Variante der Erfindung enthalten die erfindungsgemäßen Zusammensetzungen Wachse und/oder Wachsderivate aus der Gruppe der Ester von langkettigen Carbonsäuren und Monoalkoholen mit insgesamt 34 bis 50 C-Atomen, deren sulfochlorierte oder sulfidierte Derivate, deren durch Hydrierung erhaltene Derivate und deren durch Fluorwasserstoffbehandlung erhaltene Derivate. Bevorzugt werden dabei Ester mit einer Jodzahl von unter 95, insbesondere 75 bis 95. Gemische solcher Fettsäureester sind bereits beschrieben und kommerziell verfügbar.

Beispielsweise eignen sich Wachsderivate die durch Sulfochlorierung, Sulfidierung, Hydrierung oder Fluorwasserstoffbehandlung von ungesättigten langkettigen Estern von Carbonsäuren mit Monoalkoholen mit insgesamt 34 bis 50 C-Atomen erhalten wurden. Die sulfochlorierten und sulfidierten Ester stehen dabei als kommerzielle Produkte zur Verfügung.

Es können auch die Wachsderivate eingesetzt werden, die durch Hydrierung von ungesättigten langkettigen Estern von Carbonsäuren mit Monoalkoholen mit insgesamt 34 bis 50 C-Atomen als nunmehr teilgesättigte oder vollständig gesättigte Derivate erhalten wurden. In diesem Zusammenhang werden unter teilgesättigten Derivaten solche verstanden, deren Jodzahl unter der des bei der Hydrierung eingesetzten Eduktes liegt. Beispielsweise können als teilgesättigte bis gesättigte Derivate Ester mit Jodzahlen von unter etwa 40 eingesetzt werden. Sowohl die teilgesättigten als auch die gesättigten Ester sind kommerziell erhältlich.

Es können ferner Wachsderivate eingesetzt werden, die durch Fluorwasserstoffbehandlung von ungesättigten langkettigen Estern von Carbonsäuren mit Monoalkoholen mit insgesamt 34 bis 50 C-Atomen erhalten wurden. Die durch Fluorwasserstoffbehandlung erhaltenen Derivate sind z. B. aus der DOS 33 35 870 bekannte, Fluor enthaltende, wachsartige Massen, deren Fluorgehalt in einem weiten Bereich variierbar ist. Der Fluorgehalt dieser Addukte von Fluorwasserstoff an diese ungesättigten langkettigen Ester liegt z. B. im Bereich von 0,1 bis 4,3 Gew.-%. Eine völlig andere Art von Derivaten der langkettigen ungesättigten Ester, die durch Fluorwasserstoffbehandlung erhältlich sind, sind ölige Produkte, nachstehend Sesquimere genannt, die gegenüber dem Ausgangswachs die 1,1- bis 1,9-fache Molmasse und einen Gehalt an nicht umgesetztem Wachs von unter 1 Gew.-% enthalten. Diese Wachsderivate enthalten - wenn überhaupt - nur sehr geringe Gehalte an gebundenem Fluor. In der Regel liegt der Fluorgehalt unter 0,1 Gew.-% und die Jodzahl in einem Bereich von 5 bis 20.

Weitere Wachse, die im Sinne der vorliegenden Erfindung verwendet werden können, sind Paraffinwachse oder synthetische Wachse, d. h. insbesondere Polymere wie z. B. Polyethylenwachse oder gegebenenfalls oxidierte Polyethylenwachse. So eignet sich z. B. ein oxidiertes Polyethylenwachs mit mittlerem Molekulargewicht von 3700 bis 4500 (viskosimetrisch).

Als trennende Agenzien können in den erfindungsgemäßen Zusammensetzungen auch Silikone enthalten sein. Die verwendeten Silikone können in Form von Ölen, Fetten oder Harzen vorliegen. Die Silikone können als solche oder in Form von Silikonemulsionen oder Silikonpasten, die einen Konsistenzregler, beispielsweise hochdisperse Kieselsäure in das Silikonöl eingearbeitet, enthalten, verwendet werden. Silikonfette enthalten gewöhnlich Metallseifen als konsistenzregelnde Bestandteile. Die in der vorliegenden Erfindung verwendeten Silikonprodukte sind im Handel verfügbare Produkte. Als Silikonöl kann beispielsweise ein Silikonöl mit einem breiten Viskositätsbereich im Bereich von 100 bis 60.000 mm²/s, insbesondere mit einer Viskosität von 10.000 bis 30.000 mm²/s eingesetzt werden. Als sehr zweckmäßig erweisen sich Silikonöle mit Viskositäten von 15.000 bis 25.000 mm²/s.

Als weitere trennend wirksame Agenzien eignen sich Metallseifen, beispielsweise Fettsäuresalze der Metalle Magnesium, Calcium, Zink, Aluminium oder Blei. Gegebenenfalls werden die Metallsalze der Stearinsäure eingesetzt, wobei dann das Magnesiumstearat bevorzugt ist.

Als weitere trennend wirksame Agenzien können die erfindungsgemäßen Zusammensetzungen auch anorganische Pulver, vorzugsweise Graphit, Talkum oder Glimmer, enthalten.

Es können auch andere übliche Agenzien mit trennend wirksamen Eigenschaften wie Öle, z. B. Mineral- und Esteröle in den erfindungsgemäßen Zusammensetzungen verwendet werden. Weitere geeignete trennend wirksame Agenzien sind Polymere, z. B. polymere Alkohole wie beispielsweise Polyethylenglycol, Polyamide Polyolefine oder Polytetrafluorethylenwachse.

Die Konzentrationen der trennend wirksamen Agenzien können in den erfindungsgemäßen Zusammensetzungen variieren. So kann in einer vorteilhaft als Trennmittel geeigneten Zusammensetzung das trennend wirksames Agens zweckmäßig in einer Menge von 0,1 bis 30 Gew.-% enthalten sein.

In einer bevorzugten Ausgestaltung der Erfindung enthalten die erfindungsgemäßen Zusammensetzungen für Trennmittel übliche Lösungsvermittler aus der Gruppe flüssiger aliphatischer Kohlenwasserstoffe mit Siedepunkten von bis zu 200 °C. Die Lösungsvermittler dienen im allgemeinen zur besseren Lösung der in den Zusammensetzungen verwendeten trennend wirksamen Agenzien, insbesondere zur besseren Lösung der gesättigten, teilgesättigten und/oder sulfochlorierten oder sulfidierten und/oder durch Fluorwasserstoffbehandlung erhaltenen Derivate von Estern der langkettigen Carbonsäuren und Monoalkoholen mit insgesamt 34 bis 50 C-Atomen. Beispiele für solche Lösungsvermittler sind z. B. Heptan oder Benzinfraktionen mit einem Siedebereich von 100 bis 140 °C. Es können natürlich auch andere an sich bekannte Lösungsvermittler Verwendung finden.

In den Trennmittel-Zusammensetzungen können übliche Lösungsvermittler in Mengen von bis zu 80 Gew.-%, enthalten sein. Vorteilhaft enthalten die erfindungsgemäßen Zusammensetzungen die Lösungsvermittler in einer Menge von 1 bis 80 Gew.-%, vorzugsweise 20 bis 80 Gew.-%. Vorzugsweise werden als Lösungsvermittler Benzinfraktionen mit einem Siedebereich innerhalb 100 bis 140 °C in einer Menge von 25 bis 75 Gew.-% eingesetzt.

Bei weiteren Ausgestaltungen der erfindungsgemäßen Zusammensetzungen kann es vorteilhaft sein, bekannte Stabilisatoren und/oder Korrosionsinhibitoren in einer Menge von bis zu 1 Gew.-% zuzusetzen. Die erfindungsgemäßen Zusammensetzungen können daher kommerziell verfügbare Korrosionsinhibitoren für Metalle wie z. B. Magnesium, Aluminium, Titan, Messing, Bronze oder Stahl enthalten. Solche Korrosionsinhibitoren basieren zumeist auf Zusammensetzungen, die organische Verbindungen mit Heteroatomen wie Schwefel oder insbesondere Stickstoff enthalten. Bewährt haben sich z. B. einzelne Verbindungen oder Gemische aus der Klasse der Benzothiazole, z. B. Mercaptobenzothiazol, Benzimidazole, z. B. 2-Phenylbenzimidazol, Triazole, z. B. Benzotriazole, Tolyltriazole, Oxazoline, z. B. Alkyl- und/oder Hydroxyalkylsubstituierte Oxazoline, Amide, Amine, z. B. tertiäre Amine. Besonders vorteilhaft haben sich dabei Korrosionsinhibitoren auf der Basis von Oxazolin erwiesen.

Die erfindungsgemäßen Zusammensetzungen liegen entweder als Lösungen oder als Dispersionen vor, wobei unter Dispersionen sowohl Emulsionen als auch Suspensionen verstanden werden.

Die Erfindung umfaßt auch das Verfahren zur Herstellung der erfindungsgemäßen Zusammensetzungen, wobei man in den jeweiligen Fluorkohlenwasserstoff der Zusammensetzung ein oder mehrere trennend wirksame Agenzien und gegebenenfalls weitere für Trennmittel übliche Zusätze aus der Gruppe der Lösungsvermittler, Korrosionsinhibitoren und Stabilisatoren einarbeitet.

Weiterhin umfaßt die Erfindung auch die Verwendung der Zusammensetzungen als Trennmittel z. B. bei der Kunststoff- oder Schaumstoffherstellung oder in anderen Anwendungsbereichen. Als Trennmittel können die erfindungsgemäßen Zusammensetzungen beispielsweise auch in der Metall- oder Kunststoffverarbeitung verwendet werden. Die erfindungsgemäßen Zusammensetzungen vermindern in vorteilhafter Weise die Adhäsion zwischen Werkzeug und Werkstück oder Form und Formling aus Metall oder Kunststoff, beispielsweise aus Polyester, Silikonpolymeren oder Polyurethanen. Vorzugsweise eignen sich die erfindungsgemäßen Zusammensetzungen als Trennmittel bei der Herstellung von geformten Kunststoffteilen, insbesondere Schaumstoffteilen. Durch die Verwendung der erfindungsgemäßen Zusammensetzung als Trennmittel können so Oberflächenprobleme zwischen Werkzeug und Werkstück beispielsweise beim Spritzgießen von Kunststoffen vermieden werden. Mit gutem Erfolg lassen sich die erfindungsgemäßen Zusammensetzungen als Trennmittel bei der Polyurethan-Verschäumung einsetzen, wobei sie die Schaumbildung praktisch nicht beeinträchtigen. Hierbei besteht ein Vorteil der erfindungsgemäßen Trennmittel darin, daß sie sehr energiesparend eingesetzt werden können. Bekanntermaßen muß beim Herstellen von Schaumstoffen nach dem Bestreichen der Form mit dem Trennmittel zunächst das Lösungsmittel verdampft werden. Bei Verwendung der erfindungsgemäßen Zusammensetzung braucht die Form zum Verdampfen des Lösungsmittels weit weniger aufgeheizt zu werden als bei anderen üblichen vorbekannten Zusammensetzungen, da es sich hier bei den verwendeten Fluorkohlenwasserstoffen um druckverflüssigte Gase mit niedrigem Siedepunkt handelt. Auch beim Formgießen von Kunststoffen stellen die erfindungsgemäßen Trennmittel ebenfalls ein wertvolles, die Entformung erleichterndes Produktionshilfsmittel dar. Zusätzliche Vorteile der erfindungsgemäßen Zusammensetzungen zeigen sich bei längerem Einsatz der verwendeten Formen z. B. darin, daß die verwendeten Formen zwischen den Arbeitsgängen seltener gereinigt werden müssen. Die erfindungsgemäßen Trennmittel können in der üblichen Weise, z. B. als Flüssigkeiten, Pasten oder versprühbare Trennmittel, die beispielsweise mit Handsprühgeräten, Aerosoldosen oder automatischen Sprühsystemen aufgetragen werden, zur Anwendung kommen.

Die erfindungsgemäßen Zusammensetzungen mit den genannten Fluorkohlenwasserstoffen als Verdünnungs- bzw. Lösungsmittel weisen gute adhäsionsvermindernde Eigenschaften, hohe chemische Indifferenz, gutes Spreitungsvermögen und hohe Ergiebigkeit auf. Außerdem bewirkt der Gehalt an Fluorkohlenwasserstoff in den erfindungsgemäßen Zusammensetzungen eine Erhöhung des Flammpunktes, so daß die Zusammensetzungen teilweise praktisch keinen Flammpunkt mehr zeigen. Auch ist die Eignung der Fluorkohlenwasserstoffe für Trennmittel-Zusammensetzungen sehr überraschend, da diese aufgrund ihrer Chlorfreiheit nur eine geringe Lösekraft besitzen.

Die nachfolgenden Beispiele sollen die Erfindung näher erläutern, ohne sie jedoch in ihrem Umfang zu begrenzen. Zusammensetzungen mit anderen erfindungsgemäß verwendbaren Fluorkohlenwasserstoffen als den in den nachfolgenden Beispielen angegebenen Fluorkohlenwasserstoffen und andere Konzentrationen lassen sich in analoger Weise herstellen.

### Beispiel 1:

Eine erfindungsgemäße Zusammensetzung wurde hergestellt, indem 2 Gew.-% HF-Wachs-Addukt (= Substanz des Beispiels 1 aus der deutschen Offenlegungsschrift 33 35 870), 50,0 Gew.-% 1,1,1,2-Tetrafluorethan (R 134a) und 48,0 Gew.-% einer Benzinfraktion mit einem Siedebereich von 100 bis 140 °C miteinander vermischt wurden. Unter HF-Wachs-Addukt versteht man ein Wachsderivat, welches durch Fluorwasserstoff-Behandlung von ungesättigten langkettigen Estern von Carbonsäuren mit Monoalkoholen mit insgesamt 34 bis 50 C-Atomen erhalten wird, wobei dieses Derivat an die Doppelbindungen des Eduktes addierten Fluorwasserstoff aufweist. Die Herstellung dieses HF-Wachs-Adduktes entspricht dem Beispiel 1 der deutschen Offenlegungsschrift 33 35 870.
Man erhielt die erfindungsgemäße Zusammensetzung als Lösung, die gute trennmittelwirksame Eigenschaften aufwies.

### Beispiele 2 bis 10:

Analog zu Beispiel 1 wurden die weiteren in der folgenden Tabelle wiedergegebenen Beispiele 2 bis 10 von erfindungsgemäßen Zusammensetzungen hergestellt, die ebenfalls hervorragende trennmittelwirksame Eigenschaften besitzen. Die Komponenten sind in Gew.-% angegeben.

| Zusammensetzungsbestandteile | Beispiele 2 - 10 | | | | | | | | |
|---|---|---|---|---|---|---|---|---|---|
| | 2 | 3 | 4 | 5 | 6 | 7 | 8 | 9 | 10 |
| R 134a | 47,5 | 40,0 | | | | | | | |
| R 143a | | | 55,0 | 50,0 | 40,0 | 50,0 | | | 40,0 |
| R 125 | | | | | | | | 35,0 | |
| R 32 | | | | | | | 20,0 | | |
| Sesquimer* | | | | | 27,0 | | | | |
| Wachsester (Jodzahl 85) | | | | | | | | | 32,0 |
| Siliconöl (20.000 mm²/s) | | | 4,0 | | | | | | |
| Paraffin (Schmelzp. 56 - 58 °C) | | 30,0 | | | | 10,0 | 6,0 | | |
| Oxidiertes Polyethylenwachs (Schmelzp. 89 - 99 °C) | 5,0 | | | 4,0 | | | | 5,0 | |
| Polyethylenwachs (Schmelzp. 98 - 108 °C) | | | | | 3,0 | | | | 3,0 |
| Magnesiumstearat | | | | | | | | 1,0 | |
| Benzinfraktion (100 - 140 °C) | 47,5 | 30,0 | 41,0 | 46,0 | 30,0 | 40,0 | 74,0 | 59,0 | 25,0 |
| Art der Zusammensetzung ** | D | D | L | D | D | D | L | D | D |

| | | | | | | | | | |
|---|---|---|---|---|---|---|---|---|---|
| * Substanz des Beispiels 2 der deutschen Offenlegungsschrift 33 35 870 | | | | | | | | | |
| ** L = klare Losung; D = Dispersion | | | | | | | | | |

## Patentansprüche

1. Druckverflüssigte Zusammensetzungen, enthaltend wenigstens einen Fluorkohlenwasserstoff aus der Gruppe 1,1,1,2-Tetrafluorethan (R134a), 1,1,1-Trifluorethan (R143a), Pentafluorethan (R125), Difluormethan (R32), 1,1,2-Trifluorethan (R143), 1,1,2,2-Tetrafluorethan (R134), Trifluormethan (R23), 1,1-Difluorethan (R152a), Tetrafluormethan (R14), Hexafluorethan (R116) und ein trennend wirksames Agens und gegebenenfalls weitere für Trennmittel übliche Zusätze aus der Gruppe der Lösungsvermittler, Korrosionsinhibitoren und Stabilisatoren.

2. Zusammensetzungen nach Anspruch 1, dadurch gekennzeichnet, daß der Fluorkohlenwasserstoff ein wasserstoffhaltiger Fluorkohlenwasserstoff, vorzugsweise 1,1,1,2-Tetrafluorethan (R134a) oder Pentafluorethan (R125) ist.

3. Zusammensetzungen nach Anspruch 1, dadurch gekennzeichnet, daß sie wenigstens 15 Gew.-% eines der Fluorkohlenwasserstoffe, 0,1 bis 40 Gew.-% an trennend wirksamem Agens und gegebenenfalls bis zu 80 Gew.-% an Lösungsvermittlern enthalten.

4. Zusammensetzungen nach Anspruch 2, dadurch gekennzeichnet, daß sie das trennend wirksame Agens in einer Menge von 0,1 bis 30 Gew.-% enthalten.

5. Zusammensetzungen nach Anspruch 1, dadurch gekennzeichnet, daß sie als wirksames Agens ein trennend wirksames Agens aus der Gruppe der Wachse, Wachsderivate, Paraffine, Silikone, Metallseifen, Fette, Öle, Polymere und anorganische Pulver enthalten.

6. Zusammensetzungen nach Anspruch 5, dadurch gekennzeichnet, daß sie Wachse und/oder Wachsderivate aus der Gruppe der Ester von langkettigen Carbonsäuren und Monoalkoholen mit insgesamt 34 bis 50 C-Atomen, deren sulfochlorierte oder sulfidierte Derivate, deren durch Hydrierung erhaltene Derivate und deren durch Fluorwasserstoffbehandlung erhaltene Derivate enthalten.

7. Zusammensetzungen nach Anspruch 6, dadurch gekennzeichnet, daß die Wachse und/oder Wachsderivate eine Jodzahl von unter 95 aufweisen.

8. Zusammensetzungen nach Anspruch 5, dadurch gekennzeichnet, daß sie Paraffinwachse und/oder synthetische Wachse, insbesondere Polyethylenwachse oder oxidierte Polyethylenwachse enthalten.

9. Zusammensetzungen nach Anspruch 5, dadurch gekennzeichnet, daß sie Metallseifen der Metalle Magnesium, Calcium, Zink, Aluminium oder Blei enthalten.

10. Zusammensetzungen nach den Ansprüchen 1 bis 9, dadurch gekennzeichnet, daß sie als Lösungsvermittler flüssige aliphatische Kohlenwasserstoffe mit Siedepunkten von bis zu 200 °C, enthalten.

11. Zusammensetzungen nach Anspruch 10, dadurch gekennzeichnet, daß sie den Lösungsvermittler in einer Menge von 1 bis 80 Gew.-%, vorzugsweise 20 bis 80 Gew.-%, enthalten.

12. Zusammensetzungen nach Anspruch 10 und 11, dadurch gekennzeichnet, daß sie als Lösungsvermittler eine Benzinfraktion mit einem Siedebereich innerhalb 100 bis 140 °C in einer Menge von 25 bis 75 Gew.-% enthalten.

13. Zusammensetzungen nach einem der vorherigen Ansprüche, dadurch gekennzeichnet, daß sie Stabilisatoren und/oder Korrosionsinhibitoren in einer Menge von bis zu 1 Gew.-% enthalten.

14. Verwendung der Zusammensetzungen nach Anspruch 1 bis 13 als Trennmittel.

15. Verfahren zur Herstellung von Zusammensetzungen gemäß einem der Ansprüche 1 bis 13, dadurch gekennzeichnet, daß man in dem jeweiligen Fluorkohlenwasserstoff ein oder mehrere trennend wirksame Agenzien und gegebenenfalls weitere für Trennmittel übliche Zusätze aus der Gruppe der Lösungsvermittler, Korrosionsinhibitoren und Stabilisatoren einarbeitet.
